# EUROPEAN PATENT APPLICATION

(11) **EP 1 615 236 A2**
(43) Date of publication of application: **11.01.2006**
(21) Application number: 05253774.3
(22) Date of filing: 17.06.2005
(51) Int. Cl.: G21K 4/00, C09K 11/85

(54) **Radiographic image conversion panel**

(30) Priority: 25.06.2004 JP 2004187575
(71) Applicant: Konica Minolta Medical & Graphic, Inc., Tokyo 163-0512 (JP)
(72) Inventor: Mishina, Noriyuki, Hino-shi Tokyo 191-8511 (JP); Yanagita, Takafumi, Hino-shi Tokyo 191-8511 (JP)
(74) Representative: Murphy, Colm Damien

(57) **Abstract**

A radiographic image conversion panel having stimulable phosphor containing a columnar crystal of stimulable phosphor formed by gas phase deposition method on a support, in which the surface reflectance at a wavelength of 440 nm of the support is from 50 to 100% and waviness of the surface of the support (WCA) is from 0.1 to 1.0.

## Description

### FIELD OF THE INVENTION

The invention relates to a radiographic image conversion panel employing stimulable phosphor, and to a radiographic image conversion panel superior in the luminance and the graininess.

### BACKGROUND

Hitherto, a radiographic method employing silver salt has been applied for obtaining a radiographic image. However, a method is developed, in which radiation image is realized without use of silver salt. A method is disclosed, in which radiation penetrated through an object is absorbed by a phosphor and then the phosphor is stimulated by certain energy so that the energy of the radiation accumulated in the phosphor is emitted as luminescence and the luminescence light is detected for imaging.

In concrete, for example, a radiographic image conversion method such as that disclosed in U. S. Patent No. 3,859,527 is known, in which a panel constituted by a stimulable phosphor layer provided on a support is employed and one or both of visible light and infrared ray is applied as the stimulation energy.

The radiographic image conversion method employing stimulable phosphor displaying higher luminance and higher sensitivity has been futher developed, for example, a radiographic image conversion method such as that described in Japanese Patent Tokkai Sho 59-75200 in which BaFX:Eu²⁺ (X is Cl, Br or I) type phosphor is employed, a radiographic image conversion method such as that described in Tokkai Sho 61-72087 in which an alkali halide phosphor is employed and a radiographic image conversion method such as that described in Tokkai Sho 61-73786 and 61-73787, in which alkali halide phosphor containing T1⁺ and Ce³⁺, Sm³⁺, Eu³⁺, Y³⁺, Ag⁺, Mg²⁺, Pb²⁺ or In³⁺ is employed as a co-activator.

Recently, a radiographic image conversion panel having higher image quality is demanded for diagnosis image. For example, it is tried to improve the sensitivity and the graininess by controlling the shape of the stimulable phosphor itself.

In one of such the trials, a method such as that described in Tokkai Sho 61-142497 is applied, in which a stimulable phosphor layer composed of fine pseudo-columnar blocks formed by depositing the stimulable phosphor on a support having a fine uneven pattern is employed.

Moreover, the following methods are proposed: a method such as that described in Tokkai Sho 61-142500 employing a radiographic image conversion panel having a stimulable phosphor layer which is formed by depositing columnar blocks of the stimulable phosphor on a support having fine patters and the cracks between the blocks are subjected by a shock treatment and then the block is further grown, a method such as that described in Tokkai Sho 62-39737 employing a radiographic image conversion panel in which a stimulable phosphor layer formed on a support is made a pseudo-columnar form by cracking the layer, and a method such as that described in Tokkai Sho 62-110200 employing a radiographic image conversion panel having a stimulable phosphor layer which is formed by forming a stimulable phosphor layer having hollows by vapor deposition and then the hollows are grown by heating treatment so as to form cracks.

Moreover, a radiographic image conversion panel is proposed in Tokkai Hei 2-58000; in the stimulable phosphor layer of which, slender columnar crystals having certain angle with the direction of the normal line of the support are formed by a gas phase deposition method.

Recently, a radiographic image conversion panel employing a stimulable phosphor principally constituted by alkali halide such as CsBr activated by Eu is proposed and high X-ray conversion efficiency can be obtained particularly by the use of Eu as the activator.

However, there are problems that the luminance of the radiographic image conversion panel is lowered and the graininess is degraded since the photo-stimulated luminescence light emitted from the stimulable phosphor layer is not effectively put out.

### DISCLOSURE OF THE INVENTION

### PROBLEMS TO BE SOLVED BY THE INVENTION

An object of the invention is to provide a radiographic image conversion panel excellent in the luminance and graininess.

### MEANS FOR SOLVING PROBLEMS

The object of the invention can be attained by the following constitution.
1. A radiographic image conversion panel having a stimulable phosphor layer containing a columnar crystal of stimulable phosphor formed by a gas phase deposition method on a support wherein the surface reflectance of the support at 440 nm is from 50 to 100% and the waviness (WCA) of the support is from 0.1 to 1.0.
2. The radiographic conversion panel of Item 1, wherein the stimulable phosphor is a stimulable phosphor principally comprising alkali halide represented by the following Formula 1:

   Formula 1 M¹X·aM²X'·bM³X"₃:eA

   in the formula M¹ is an alkali metal atom selected from the group consisting of Na, K, Rb and Cs; M² is an alkali metal atom other than the alkali metal atom of M1 which is selected from the group consisting of Na, K, Rb and Cs; M³ is a trivalent metal atom selected from the group consisting of Y, La, Ce, Pr, Nd, Pm, Sm, Eu, Gd, Tb, Dy, Ho, Er, Tm, Yb and Lu; X, X' and X" are each a halogen atom selected from the group consisting of F, Cl, Br and I; A is a rare-earth metal atom selected from the group consisting of Eu, Tb, In, Cs, Ce, Tm, Dy, Pr, Ho, Nd, Er, Gd, Lu, Sm and Y; and a, b and e are each 0 ≤ a ≤ 0.5, 0 ≤ b ≤0.5 and 0 ≤ e ≤ 0.2, respectively.

### EFFECT OF THE INVENTION

The radiographic image conversion panel according to the invention is excellent in the luminance and graininess.

### BRIEF DESCRIPTION OF THE DRAWINGS

Fig. 1 shows a schematic drawing of an example of the constitution of the radiographic image conversion panel according to the invention.
Fig. 2 shows a schematic drawing of an example of a vapor deposition apparatus for preparing a stimulable phosphor layer on a support by vapor deposition.

### PREFERABLE EMBODIMENT OF THE INVENTION

The invention is described in detail below.

The invention of Item 1 is a radiographic image conversion panel having a stimulable phosphor layer containing a columnar crystal of stimulable phosphor formed by a gas phase deposition method on a support wherein the surface reflectance of the support at 440 nm is from 50 to 100% and the waviness (WCA) of the support is from 0.1 to 1.0. The object of the invention can be attained by such the constitution.

The surface reflectance of the support is the value measured by a spectral colorimeter CM-2022, manufactured by Konica Minolta Co., Ltd.

The waviness of the support surface (WCA) is the filtered center line waviness defined by JIS-B 0610, 1987 measured by a roughness meter Surfcom 1500A, manufactured by Tokyo Seimitsu Co., Ltd., under a condition of a cutoff value of from 0.08 to 2.5.

The surface waviness (WCA) of the support can be controlled into the range according to the invention, for example, by polishing surface by sand blast. The sand blast method is a method for shaving by blasting sand such as emery powder together with compressed air. Though the blast condition is varied depending on the support, the desired waviness (WCA) can be obtained by controlling the particle size and weight of the sand and the blasting time.

Tough known stimulable phosphors, hereinafter referred to as simply a phosphor, can be employed in the radiographic image conversion panel of the invention, among them the stimulable phosphor preferably employed in the invention is ones represented by Formula 1.

In the stimulable phosphor represented by Formula 1, M¹ is an alkali metal atom selected from Li, Na, K, Rb and Cs, preferably from Rb and Sc, and more preferably Cs.

M² is a divalent metal atom selected from Be, Mg, Ca, Sr, Ba, Zn, Cu and Ni, preferably from Be, Mg, Ca, Sr and Ba.

M³ is a trivalent metal atom selected from Sc, Y, La, Ce, Pr, Nd, Pm, Sm, Eu, Gd, Tb, Dy, Ho, Er, Tm, Yb, Lu, Al, Ga and In, among then elected one from Y, Ce, Sm, Eu, Al, La, Gd, Lu, Ga and In is preferred.

A is a metal atom selected from Eu, Tb, In, Ce, Tm, Dy, Pr, Ho, Nd, Yb, Er, Dg, Lu, Sm, Y, Tl, Na, Ag, Cu and Mg.

From the viewpoint of raising the photo-stimulated luminescence of the stimulable phosphor, X, X7 and X" are each a halogen atom selected from Cl, Br and I, preferably from F, Cl and Br, and more preferably from Br and I.

The stimulable phosphor represented by Formula 1 is produced, for example, by the following method.

An acid (HI, HBr, HCL or HF) is mixed and stirred with a carbonate as the raw material of the phosphor so as to be the following composition and filtered at the neutralized point, and then the water in the filtrate is removed by evaporation to prepare the following crystals.

As the raw material of the phosphor the followings are employed:
(a) One compound selected from NaF, NaCl, NaBr, NaI, KF, KCl, KBr, KI, RbF, RbCl, RbBr, RbI, CsF, CsCl, and CsI
(b) One compound selected from MgF₂, MgCl₂, MgBr₂, MgI₂, CaF₂, CaCl₂, CaBr₂, CaI₂, SrF₂, SrCl₂, SrBr₂, SrI₂, BaF₂, BaCl₂, BaBr₂, BaBr₂·2H₂O, BaI₂, ZnF₂, ZnCl₂, ZnBr₂, ZnI₂, CdF₂, CdCl₂, CdBr₂, CdI₂, CuF₂, CuCl₂, CuBr₂, CuI₂, NiF₂, NiCl₂, NiBr₂ and NiI₂
(c) One compound having a metal atom selected from Eu, Tb, In, Cs, Ce, Tm, Dy, Pr, Ho, Nd, Yb, Er, Gd, Lu, Sm, Y, Tl, Na, Ag, Cu and Mg, and
(d) As the activator, one metal atom, for example, selected from Eu, Tb, In, Ce, Tm, Dy, Pr, Ho, Nd, Yb, Er, Gd, Lu, Sm, Y, Tl, Na, Ag, Cu and Mg

In Formula 1, a is 0 ≤ a ≤ 0.5 and preferably 0 ≤ a ≤ 0.01, b is 0 ≤ a ≤ 0.5 and preferably 0 ≤ a ≤ 0.01, and e is 0 ≤ a ≤ 0.2 and preferably 0 ≤ a ≤ 0.1.

The above raw materials of the phosphor (a) through (d) are weighed so as to be the mixing ratio of within the above range and dissolved in purified water.

The mixing may be performed sufficiently by using a mortar, a ball mill or a mixer mill.

The pH value C of the obtained solution was controlled by adding a designated acid to 0 < C < 7, and then the water in the solution was evaporated.

Thus obtained raw material mixture was charged into a heat resistive receptacle such as a quartz crucible and an alumina crucible and baking in an electric furnace. The baking temperature is preferably from 500 to 1000 °C. The baking time is preferably from 0.5 to 6 hours even though the time is varied depending on the charged amount of the raw materials and the baking temperature.

The atmosphere of the baking is preferably a weak reducing atmosphere such as a nitrogen atmosphere containing a little amount of hydrogen gas and a carbon dioxide atmosphere containing a little amount of carbon monoxide, a neutral atmosphere such a as a nitrogen gas atmosphere and an argon gas atmosphere, or a weak oxidation atmosphere containing a little amount of oxygen.

After baking under the above conditions, the baked product is take out from the electric furnace and crushed, and then the crushed powder is charged again into the heat resistive receptacle and re-baked in the electric furnace under the same conditions, by which the emission luminance of the phosphor can be raised. Though the desired phosphor can be obtained by cooling by standing in air after taking out from the electric furnace, the cooling may be carried out in the weak reducing atmosphere or the neutral atmosphere the same as the atmosphere for the baking. Moreover, the photo-stimulated luminescence light emitted from the phosphor can be further strengthen by rapidly cooling the baked phosphor in the weak reducing, neutral of the weak oxidation atmosphere by moving the phosphor from the heating portion to a cooling portion in the electric furnace.

The stimulable phosphor layer according to the invention is formed by a gas phase growing method.

For the gas phase growing of the stimulable phosphor layer, a vapor deposition method, a spattering method, a CVD method, an ion plating method can be applied.

In the invention, the following method can be exemplified.

In the first vapor deposition method, a support is set in a vapor deposition apparatus and then air in the apparatus is exhausted so that the vacuum degree becomes to about 1.333 x 10⁻⁴ Pa.

After that, one of the foregoing stimulable phosphors is heated and evaporated by a resistor heating method or an electron beam method to grow the stimulable phosphor layer to the desired thickness on the surface of the support.

As a result of that, a stimulable phosphor layer containing no binder is formed; the formation of the stimulable phosphor layer can be separated into plural steps in the above vapor deposition process.

It is also possible in the vapor deposition process that plural phosphors are separately evaporated by plural resistor heaters of electron beams to be co-deposited so that an objective stimulable phosphor is synthesized on the support and simultaneously form a desired stimulable phosphor layer.

After completion of the vapor deposition, the radiographic image conversion panel according to the invention is produced by providing a protective layer on the side of the stimulable phosphor layer opposite to the side contacting to the support, according to necessity. A procedure may be taken, in which the stimulable phosphor layer is formed on the protective layer and then the support is provided.

In the foregoing vapor deposition method, the subject to be deposited (the support, protective layer or intermediate layer) may be heated or cooled on the occasion of the deposition according to necessity.

The stimulable phosphor layer may be subjected to a heating treatment after completion of the deposition. In the vapor deposition method, a reaction vapor deposition by introducing O₂ or H₂O may be applied according to necessity.

In the second spattering method, a support having a protective layer or an intermediate layer is set, as the same as in the vapor deposition method, in a spattering apparatus and air in the apparatus is once exhausted to make the vacuum degree in the apparatus to about 1.0 to 10⁻⁴ Pa. And then inactive gas such as Ar and Ne is introduced into the spattering apparatus to make the gas pressure in the apparatus to about 1.0 x 10⁻² Pa. After that the stimulable phosphor layer is grown to the desired thickness on the support by spattering the stimulable phosphor as the target.

In the spattering process, various treatment can be applied as the same as in the vapor deposition method.

The third CVD method and the fourth ion plating method are also applicable.

The growing rate of the stimulable phosphor layer in the gas phase growing is preferable from 0.05 µm/minute to 300 µm/minute. A growing rate of less than 0.05 µm/minute is not preferable since the production efficiency is inferior. A growing rate of more than 300 µm/minute is not preferable since the growing rate is difficultly controlled.

When the radiographic image conversion panel is obtained by the vapor deposition method or the spattering method, the filling density of the stimulable phosphor can be increased because any binder is not contained in the layer. Accordingly, the radiographic image conversion layer preferable in the sensitivity and the resolving power can be obtained.

From the viewpoint for obtaining the effects of the invention, the thickness of the stimulable phosphor layer is from 50 µm to 1 mm, preferably from 100 to 700 µm, more preferably from 150 to 700 µm, and particularly preferably from 150 to 300 µm.

On the occasion of the production of the stimulable phosphor layer by the gas phase growing method, the temperature of the support, on which the stimulable phosphor layer is formed, is preferably set at a temperature of not less than 50 °C, more preferably not less than 80°C, and particularly preferably from 100 to 400 °C.

From the viewpoint for obtaining the radiographic image conversion panel, the reflectance of the stimulable phosphor layer according to the invention is preferably not less than 20%, more preferably not less than 30%, and further preferably not less than 40%. The upper limit is 100%.

The stimulable phosphor layer thus formed on the support is superior in the directivity and the thickness of it can be made lager than that of a radiographic image conversion panel having a dispersion type stimulable phosphor layer in which the stimulable phosphor is dispersed in a binder since it contains no binder. Furthermore, the sharpness of the image is raised since the scattering of the photo-stimulated luminescence light in the stimulable phosphor layer is reduced.

Filler such as a binder may be filled in the space between the columnar crystals for supplementing the strength of the layer, a high light absorbing substance or a high light reflective substance may be filled, which is effective for reducing the scatter in the side direction of the incident stimulation light additional to the supplement of the strength.

The highly reflective substance is a substance having high reflectance for the stimulation light (500 to 900 nm, particularly 600 to 800 nm), for example, a metal such as aluminum, magnesium, silver and indium, a white pigment and a colorant in the range of from green to red can be employed. The white pigment can reflect also photo-stimulated luminescence light.

Examples of the white pigment include TiO₂ (anatase type and rutile type), MgO, PbCO₃·Pb(OH)₂, BaSO₄, Al₂O₃, M_{(II)}FX in which M_{(II)} is an atom selected from Ba, Sr and Ca, and X is Cl or Br atom, CaCO₃, ZnO, Sb₂O₃, SiO₂, Lithopone (BaSO₄·ZnS), magnesium silicate, a basic silica sulfate, basic lead phosphate and aluminum silicate.

These white pigments have high hiding power and high refractive index, therefore, the photo-stimulated luminescence light is easily scattered and the sensitivity of the radiographic image conversion panel can be considerably increased.

As the substance having high light absorbancy, for example, carbon black, chromium oxide, nickel oxide, iron oxide and a blue colorant are employable. The carbon black absorbs the photo-stimulated luminescence light also.

The colorant may be either organic or inorganic one.

Examples of usable organic colorant include Zabon Fast Blue 3G, manufactured by Hoechst CO., Ltd., Estrol Brill Blue N-3RL, manufactured by Sumitomo Kagaku Co., Ltd., D & C Blue No. 1, manufactured by National Aniline Co., Ltd., Spirit Blue, manufactured by Hodogaya Kagaku Co., Ltd., Oil Blue No. 603, manufactured by Orient Co., Ltd., Quiton Blue A, manufactured by Ciba-Geigy Co., Ltd., Aizen Carotin Blue GLH, manufactured by Hodogaya Kagaku Co., Ltd., Lake Blue AFH, manufactured by Kyowa Sangyo Co., Ltd., Primo Cyanine 6GX, manufactured by Inahata Sangyo Co., Ltd., Brill Acid Green 6BH, manufactured by Hodogaya Kagaku Co., Ltd., Cyan Blue BNRCS and Lionoil Blue, manufactured by Toyo Ink Co., Ltd.

An organic metal complex colorant such as Color Index No. 24411, 23160, 74180, 74200, 28200, 23154, 23155, 24401, 14830, 15050, 15760, 15707, 17941, 74220, 13425, 13361, 13420, 11836, 74140, 74380, 47350 and 74460 are employable.

As the inorganic colorant, for example, cobalt blue, cerulean blue, chromium oxide and TiO₂-ZnO-Co-Ni can be cited.

The stimulable phosphor layer may have a protective layer.

The protective layer may be formed by directly coating a coating liquid of protective layer on the stimulable phosphor layer, pasting a previously formed protective layer onto the stimulable phosphor layer or forming the stimulable layer on a separately formed protective layer.

For the material of the protective layer, a usual material for protective layer such as cellulose acetate, nitrocellulose, poly(methyl methacrylate), poly(vinyl butyral), poly(vinyl formal), polycarbonate, a poly ester, poly(ethylene terephthalate), polyethylene, poly(vinylidene chloride), nylon, poly(ethylene tetrachloride), Poly(ethylene trifluorochloride), ethylene tetrafluoride-propylene hexafluoride copolymer, vinylidene chloride-vinyl chloride copolymer, vinylidene chloride-acrylonitrile copolymer is employed. Other than those, a transparent glass plate can be employed as the protective layer.

The protective layer may be formed by depositing an inorganic material such as SiC, SiO₂, SiN and Al₂O₃ by the spattering method.

The thickness of the protective layer is preferably from 1 to 2,000 µm.

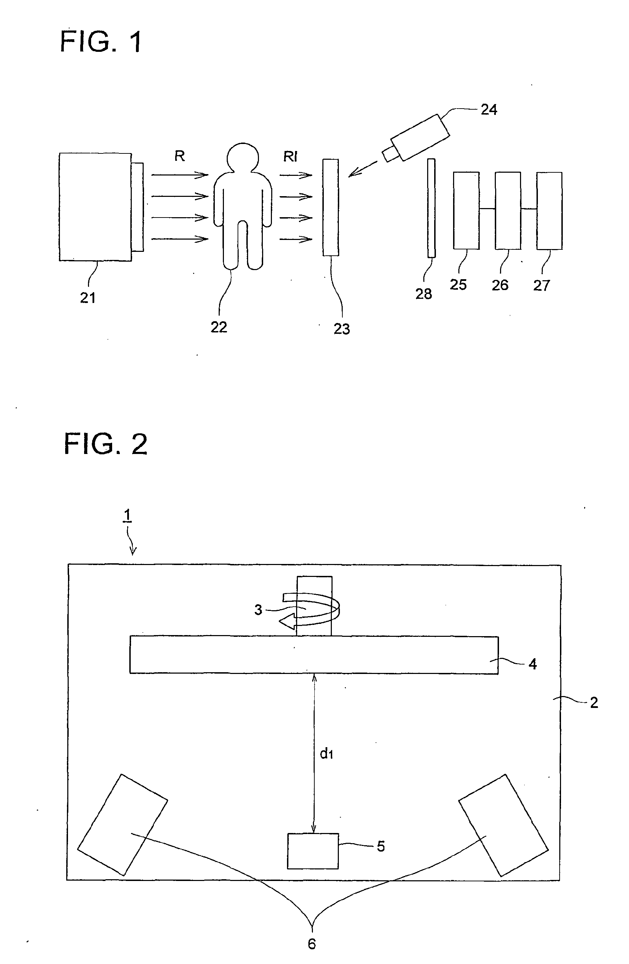

Fig. 1 is a schematic drawing of an example of the constitution of the radiographic image conversion panel according to the invention.

In Fig. 3, 21 is a radiation generating source, 22 is an object, 23 is a radiographic image conversion panel having a stimulable phosphor layer which contains a phosphor stimulable by visible or infrared rays, 24 is a stimulation light source for emitting photo-stimulated luminescence light from the radiation latent image in on the radiographic image conversion panel 23 as photo-stimulated luminescence light, 25 is a photoelectric conversion device for detecting the photo-stimulated luminescence light emitted from the radiographic image conversion panel 23, 26 is an image reproducing apparatus for reproducing an image according to the photoelectric conversion signals detected by the photoelectric conversion device 25, 27 is a image displaying apparatus for displaying the reproduced image, and 28 is a filter for cutting the reflected light from the stimulating light source 24 and passing only the light emitted from the radiographic image conversion panel 23.

Fig. 1 shows an example for obtaining the transmission radiation image, and the radiation generating apparatus 21 is not necessary when the object itself emits radiation.

The members after the photoelectric device 25 may be ones without any limitation as long as they can reproduce an image according to the light information from the radiographic image conversion panel 23.

As is displayed in Fig. 1, when the object 22 is placed between the radiation generating apparatus 21 and the radiographic image conversion panel 23 and radiation R is irradiated, the radiation R penetrates through the object 22 according to the transmittance of each parts of the object 22 and a transmitted image RI is projected onto the radiographic image conversion panel 23.

The incident transmitted image RI is absorbed by the stimulable phosphor layer of the radiographic image conversion panel 23, and a number of electron and/or positive hole proportional to the radiation amount absorbed by the stimulable phosphor layer is generated and accumulated at the trap level of the stimulable phosphor.

Thus a latent image is formed by the accumulated energy of the transmission radiation image. And then the latent image is actualized by stimulating by energy of light.

The stimulable phosphor layer is irradiated by the stimulation light source 24 generating visible or infrared rays to discharge the accumulated electrons and/or positive holes from the trap level so that the accumulated energy is emitted as photo-stimulated luminescence light.

The intensity of the photo-stimulated luminescence light is proportional to the number of the accumulated electrons and/or positive holes or the energy amount of the radiation absorbed in the stimulable phosphor layer of the radiographic image conversion panel 23. The light signal is converted by the photoelectric conversion device 25 such as a photomultiplier, and reproduced as an image by the image reproducing apparatus 26, and the image is displayed by the image displaying apparatus 27.

It is advantageous that the use of the image reproducing apparatus capable of not only reproducing the electric signal as the image but also processing, operating, memorizing and storing the image.

Furthermore, it is desirable that the photo-stimulated luminescence light has the spectrum distribution in a range as short as possible because the reflected light of the stimulation light is necessarily separated from the photo-stimulated luminescence light emitted from the stimulable phosphor layer and the photoelectric conversion device receiving the light emitted from the stimulable phosphor layer generally has higher sensitivity to light energy shorter than 600 nm.

The foregoing conditions are simultaneously satisfied since the wavelength range of the emitted light from the stimulable phosphor according to the invention is from 300 to 500 nm, and that of the stimulation light is from 500 to 900 nm. Recently, accompanied with progressing in downsizing of the diagnosis apparatus, a semiconductor laser is preferred for reading out the image on the radiographic image conversion panel since the semiconductor laser outputs high power and suits for downsizing. The wavelength of the laser light is preferably 680 nm and the stimulable phosphor contained in the radiographic image conversion panel according to the invention displays very high sharpness when the stimulation light having the wavelength of 680 nm is employed.

The stimulable phosphors of the invention each emits light having a main peak at a wavelength of not more than 500 nm which is easily separated from the stimulation light and agrees with the spectral sensitivity of the light detective device. Accordingly, the efficiency of the light detection can be made higher so as to raise the sensitivity of the image receiving system.

For the stimulation light source 24, a light source emitting light containing stimulation wavelength of the stimulable phosphor employed in the radiographic image conversion panel 23. Preferable results can be obtained by the use of the laser light, since the optical system can be made simple and the intensity of the stimulation light can be made large so as to be able to raise the photo-stimulated light emission efficiency.

Examples of the laser include a He-Ne laser, a He-Cd laser, an Ar ion laser, a Kr ion laser, an N₂ laser, a YAG laser and the secondary harmonics thereof, a ruby laser, a semiconductor laser, various kinds of dye laser and a metal vapor laser such as a copper vapor laser. Tough a continuous oscillation laser such as the He-Ne laser and the Ar ion laser is usually preferable, a pulls laser can be employed when the scanning time for a pixel of the image is synchronized with the pulls.

When the method described in Tokkai Sho 59-22046 in which the separated of the emitted light from the phosphor from the stimulation light is carried out by utilizing the delay of the light emission, the of the pulls oscillation laser is more preferably used rather than the modulation of the continuous oscillation laser.

Among the various kinds of laser light source, the semiconductor laser is particularly preferred since it is low in the cost and a modulator is not necessary.

The filter 28 is employed for passing the photo-stimulated luminescence light emitted from the radiographic image conversion panel 23 and cutting the stimulation light, accordingly the filter is decided on the combination of the wavelength of the photo-stimulated luminescence light emitted from the stimulable phosphor contained in the radiographic image conversion panel 23 and the wavelength of the stimulation light source 24.

For example, when the combination of the wavelength of the stimulation light of from 500 to 900 nm and that of the photo-stimulated luminescence light of from 300 to 500 nm is preferable for practical use, a purple through blue glass filter such as C-39, C-40, V-40, V-42 and V-44, manufactured by Toshiba CO., Ltd., 7-54 and 7-59, manufactured by Corning Co., Ltd., and BG-1, BG-2, BG-25, BG-37 and BG-38, manufactured by Spectro-Film Co., Ltd., are is employable as the filter. A filter having an optional property can be selected by the use of an interference filter. For photoelectric conversion device, ones capable of converting the variation of the light amount to the variation of electron signal, for example, a phototube, a photomultiplier, a photodiode, a phototransistor, a solar cell and a photoelectron conductive element, can be employed without any limitation.

### EXAMPLES

The invention is described below referring examples. However, the embodiment of the invention is not limited by the examples.

### Example 1

### <<Preparation of radiographic image conversion panel Samples 1 through 10>>

A stimulable phosphor layer containing a stimulable phosphor (CsBr:Eu) was formed on an aluminum support having a Fig. 2.

Air in the interior of a vacuum chamber was once exhausted and then the vacuum degree was controlled by introducing Ar gas so the vacuum degree become to 1.0 x 10⁻² Pa, and the vapor deposition was carried out until the thickness of the stimulable phosphor layer was attained at 400 µm while maintaining the surface temperature of the support at 100 °C to form a stimulable phosphor layer.

After that, the phosphor layer was treated by heating at 150 °C. The circumference portion of the support and a protective layer of borosilicate glass were sealed by an adhesive in a dry air atmosphere to obtain radiographic image conversion panel Sample 1 having a structure in which the phosphor layer is tightly enclosed.

In the apparatus shown in Fig. 2, the vapor source was placed on a normal line crossing at right angle with the center line of the support and the distance d1 between the support and the vapor source was 60 cm. The deposition was carried out while rotating the support.

### <<Evaluation on the luminance>>

For evaluating the luminance, the radiation image conversion panel was uniformly irradiated by X-ray generated by a bulb voltage of 80 kVp, and the panel was stimulated by scanning by a semiconductor laser (680 nm). The photo-stimulated luminescence light emitted from the phosphor layer was converted to electric signals by a photomultiplier R1305, manufactured by Hamamatsu Photonics K.K., and recorded on a magnetic tape after analogue/digital conversion.

The signals recorded on the magnetic tape were analyzed by a computer to obtain the intensity of the photo-stimulated luminescence light. The elative luminance of each of the radiographic image conversion panels was calculated by setting the luminance of the radiographic image conversion panel Sample 1 at 100. The higher value of the luminance is preferred.

### <<Evaluation on graininess>>

For evaluating the graininess, the radiographic image conversion panel was uniformly irradiated by X-ray generated by a bulb voltage of 80 kVp and stimulated by scanning by a semiconductor laser (680 nm) of 100 mW. The photo-stimulated luminescence light emitted from the phosphor laser was received by the light receiving device and converted to electric signals. The electric signals were subjected to analog/digital conversion and recorded on magnetic tape. The signals recorded on the magnetic tape were analyzed by the computer to obtain RMS granularity of the planer X-ray image recorded on the magnetic tape. The elative granularity of each of the radiographic image conversion panels was calculated by setting the granularity of the radiographic image conversion panel Sample 1 at 100. The lower value of the granularity is preferred.

The surface reflectance and the waving (WCA) of the support surface were measured according to the above-described method.

**Table 1**

| Sample | Stimulable phosphor layer | Surface reflectance (%) | Surface waving (WCA) | Luminance | Granularity | Remarks |
|---|---|---|---|---|---|---|
| 1 | CsBr:Eu | 95.12 | 0.06 | 1.00 | 1.00 | Inv. |
| 2 | CsBr:Eu | 93.54 | 0.23 | 0.99 | 1.24 | Inv. |
| 3 | CsBr:Eu | 71.61 | 0.98 | 0.83 | 1.46 | Inv. |
| 4 | CsBr:Eu | 57.69 | 0.68 | 0.80 | 1.89 | Inv. |
| 5 | CsBr:Eu | 9.47 | 0.94 | 0.38 | 1.91 | Comp. |
| 6 | CsBr:Eu | 92.64 | 1.40 | 0.91 | 2.57 | Comp. |

| | | | | | | |
|---|---|---|---|---|---|---|
| Inv.: Inventive Comp.: Comparative | | | | | | |

As is cleared in Table 1, it is understood that the samples according to the invention are superior to the comparative samples.

## Claims

1. A radiographic image conversion panel having a stimulable phosphor layer containing a columnar crystal of stimulable phosphor formed by a gas phase deposition method on a support wherein the surface reflectance of the support at 440 nm is from 50 to 100% and the waviness (WCA) of the support is from 0.1 to 1.0.

2. The radiographic conversion panel of Claim 1, wherein the stimulable phosphor is a stimulable phosphor principally comprising alkali halide represented by the following Formula 1:
Formula 1 M¹X·aM²X' ·bM³X"₃:eA
in the formula M¹ is an alkali metal atom selected from the group consisting of Na, K, Rb and Cs; M² is an alkali metal atom other than the alkali metal atom of M1 which is selected from the group consisting of Na, K, Rb and Cs; M³ is a trivalent metal atom selected from the group consisting of Y, La, Ce, Pr, Nd, Pm, Sm, Eu, Gd, Tb, Dy, Ho, Er, Tm, Yb and Lu; X, X' and X" are each a halogen atom selected from the group consisting of F, Cl, Br and I; A is a rare-earth metal atom selected from the group consisting of Eu, Tb, In, Cs, Ce, Tm, Dy, Pr, Ho, Nd, Er, Gd, Lu, Sm and Y; and a, b and e are each 0 ≤ a ≤ 0.5, 0 ≤ b ≤0.5 and 0 ≤ e ≤ 0.2, respectively.
